# EUROPÄISCHE PATENTSCHRIFT

(11) **EP 1 277 613 B1**
(45) Veröffentlichungstag und Bekanntmachung des Hinweises auf die Patenterteilung: **20.12.2006**
(21) Anmeldenummer: 02012217.2
(22) Anmeldetag: 04.06.2002
(51) Int. Cl.: B60N 3/10

(54) **Halter für einen Getränkebehälter**
Holder for beverage containers
Support pour récipients pour boissons

(30) Priorität: 12.07.2001 DE 10134027
(43) Veröffentlichungstag der Anmeldung: 22.01.2003
(73) Patentinhaber: fischer automotive systems GmbH, 72160 Horb (DE)
(72) Erfinder: Schaal, Falk, 72275 Alprisbach (DE); Pacher, Thomas, 72280 Dornstetten (DE)

(56) Entgegenhaltungen:
- EP-A- 0 781 683
- DE-A- 4 200 823
- US-A- 5 921 519
- PATENT ABSTRACTS OF JAPAN vol. 1997, no. 08, 29. August 1997 (1997-08-29) -& JP 09 104278 A (AICHI MACH IND CO LTD), 22. April 1997 (1997-04-22)

## Beschreibung

Die Erfindung betrifft einen Halter für einen Getränkebehälter wie bspw. eine Tasse, einen Becher oder eine Dose, mit den Merkmalen des Oberbegriffs des Anspruchs 1 bzw. der Anspruchs 3, der zum Einbau in einen Kraftwagen vorgesehen ist.

Derartige Halter sind an sich bekannt. Sie weisen eine Einstellöffnung auf, in die der Getränkebehälter einstellbar und in der der eingestellte Getränkebehälter kippsicher gehalten ist.

Der Erfindung liegt die Aufgabe zugrunde, einen derartigen Halter platzsparend in einem Kraftwagen unterbringbar auszubilden.

Diese Aufgabe wird erfindungsgemäß durch die Merkmale der Anspruchs 1 bzw. 3 gelöst. Der erfindungsgemäße Halter weist ein Ablagefach sowie einen Fachteiler auf, der mit einer Führung am Ablagefach zwischen einer Nichtgebrauchsstellung und einer Gebrauchsstellung hin- und zurückbewegbar geführt ist. In der Gebrauchsstellung unterteilt der Fachteiler das Ablagefach in einen Einstellbereich, in den ein Getränkebehälter einstellbar ist, und einen übrigen Bereich. In der Nichtgebrauchsstellung unterteilt der Fachteiler das Ablagefach nicht, so dass das gesamte Ablagefach zum Einlegen von Gegenständen zur Verfügung steht. In der Nichtgebrauchsstellung kann sich der Fachteiler bspw. versenkt in einem Boden des Ablagefachs, innen an einer Wand des Ablagefachs oder außerhalb des Ablagefachs befinden.

Die Erfindung hat den Vorteil, dass der Halter platzsparend in ein Ablagefach integriert ist, wobei bei Nichtgebrauch des Halters das gesamte Ablagefach und bei Gebrauch des Halters der nicht zum Einstellen des Getränkebehälters genutzte, übrige Bereich des Ablagefachs zum Einlegen von Gegenständen nutzbar ist. Der erfindungsgemäße Halter weist eine gute Bauraumnutzung auf. Weiterer Vorteil des erfindungsgemäßen Halters ist seine kostengünstige Herstellbarkeit aus wenigen Teilen. Prinzipiell ist es möglich, den Halter aus zwei Teilen, nämlich dem bspw. mulden- oder wannenförmigen Ablagefach und dem beweglich am Ablagefach geführten Fachteiler herzustellen.

Eine Weiterbildung der Erfindung sieht mehrere Gebrauchsstellungen vor, in die der Fachteiler bewegbar ist. In den verschiedenen Gebrauchsstellungen teilt der Fachteiler unterschiedlich große Einstellbereiche vom übrigen Ablagefach ab. Der Halter ist dadurch an unterschiedlich große Getränkebehälter anpassbar.

Eine Ausgestaltung der Erfindung sieht eine Drehlagerung als Führung des Fachteilers vor. Der Fachteiler weist eine Wandung auf, die exzentrisch zur Drehachse des Fachteilers bspw. ein Umfangswandabschnitt sein kann. Durch Drehen des Fachteilers lässt sich dieser in die Gebrauchs- und die Nichtgebrauchsstellung bringen. In der Gebrauchsstellung befindet sich die zur Drehachse exzentrische Wandung des Fachteilers im Ablagefach und unterteilt dieses in den Einstellbereich und den übrigen Bereich. Diese Ausgestaltung der Erfindung lässt sich mit bspw. horizontaler oder vertikaler Drehachse ausbilden.

Eine Weiterbildung der Erfindung sieht mehrere, bspw. zwei Fachteiler vor, um wahlweise einen oder mehrere Getränkebehälter in den Halter einstellen zu können. Diese Ausgestaltung der Erfindung bietet sich an, wenn das Ablagefach eine ausreichende Größe zum Einstellen mehrerer Getränkebehälter aufweist.

Zum kippsicheren Halten von Getränkebehältern unterschiedlichen Durchmessers sieht die Erfindung nach Anspruch 3 eine Durchmesserausgleichsklappe vor, die vorzugsweise federbeaufschlagt ein Stück weit in den Einstellbereich des Halters hineinverschwenkt. Wird der Fachteiler in die Nichtgebrauchsstellung bewegt, bewegt er die Durchmesserausgleichsklappe aus dem Ablagefach hinaus oder zumindest an dessen Randbereich, damit die Durchmesserausgleichsklappe ein Fassungsvermögen des Ablagefachs nicht oder nur wenig verkleinert. Der Fachteiler bildet also einen Antrieb für die Durchmesserausgleichsklappe.

Eine Ausgestaltung der Erfindung sieht eine Lücke zwischen dem Fachteiler und einer Wand des Ablagefachs vor, wenn sich der Fachteiler in der Gebrauchsstellung befindet.

Diese Aufgestaltung der Erfindung ermöglicht das Einstellen einer Henkeltasse in den Halter, wobei der Henkel der in den Halter eingestellten Tasse sich in der Lücke zwischen dem Fachteiler und der Wand des Ablagefachs befindet.

Die Erfindung wird nachfolgend anhand in der Zeichnung dargestellter Ausführungsbeispiele näher erläutert. Es zeigen:
- Figur 1: eine erste Ausführungsform eines erfindungsgemäßen Halters in einer Nichtgebrauchsstellung in perspektivischer Darstellung;
- Figur 2: den Halter aus Figur 1 mit einem eingestellten Getränkebehälter;
- Figuren 3a-c: einen Längsschnitt des Halters aus Figur 1 in unterschiedlichen Stellungen;
- Figur 4: eine zweite Ausführungsform eines erfindungsgemäßen Halters in einer Nichtgebrauchsstellung in perspektivischer Darstellung;
- Figur 5: den Halter aus Figur 4 in einer Gebrauchsstellung;
- Figur 6: eine dritte Ausführungsform eines erfindungsgemäßen Halters in einer Nichtgebrauchsstellung in perspektivischer Darstellung;
- Figur 7: den Halter aus Figur 6 in einer Gebrauchsstellung; und
- Figur 8: den Halter aus Figur 7 mit einem eingestellten Getränkebehälter.

Die Zeichnungen sind als vereinfachte und schematisierte Darstellungen zu verstehen.

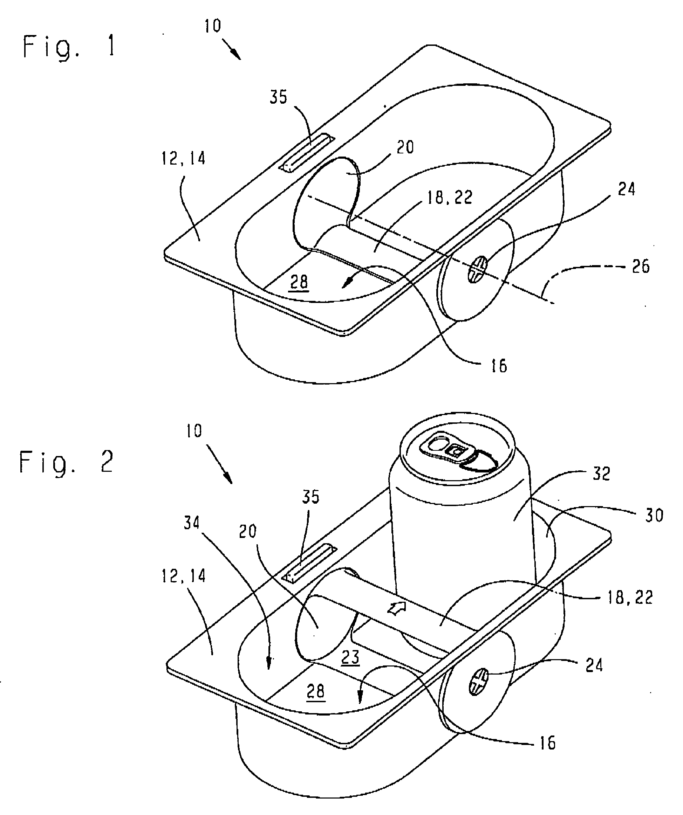

Der in Figur 1 dargestellte, erfindungsgemäße Halter 10 zum Halten eines Getränkbehälters wie bspw. einer Tasse, eines Bechers oder einer Dose ist zum Einbau in einen nicht dargestellten Kraftwagen vorgesehen. Der Halter 10 weist ein mulden- oder wannenförmiges Ablagefach 12 mit einem in Draufsicht eckigen 14 und einer in Draufsicht ovalen Vertiefung 16 auf. Der Rand 14 dient zum Einbau des Halters 10 in bspw. eine Mittelkonsole eines nicht dargestellten Kraftwagens.

Ungefähr in einer Längsmitte der Vertiefung 16 ist ein Fachteiler 18 quer angeordnet. Der Fachteiler 18 weist an seinen beiden Enden kreisförmige Stirnscheiben 20 auf, die mit einem Steg 22 einstückig verbunden sind. Der Steg 22 befindet sich an einer Umfangsstelle der Stirnscheiben 20, er bildet eine Wandung des Fachteilers 18. Die Stirnscheiben 20 sind in Seitenwänden der Vertiefung 16 des Ablagefachs 12 versenkt angeordnet. Die Stirnscheiben 20 weisen in ihren Mitten nach außen abstehende Lagerzapfen 24 auf, die drehbar in Lagerlöchern in den Seitenwänden der Vertiefung 16 einliegen. Die Lagerzapfen 24 bilden mit den Lagerlöchern eine Drehlagerung des Fachteilers 18. Eine Drehachse 26 ist in Figur 1 mit einer Strichpunktlinie dargestellt, sie verläuft quer und horizontal ungefähr in halber Höhe durch die Vertiefung 16 des Ablagefachs 12. Der Steg 22 ist parallel und exzentrisch zur Drehachse 26 angeordnet.

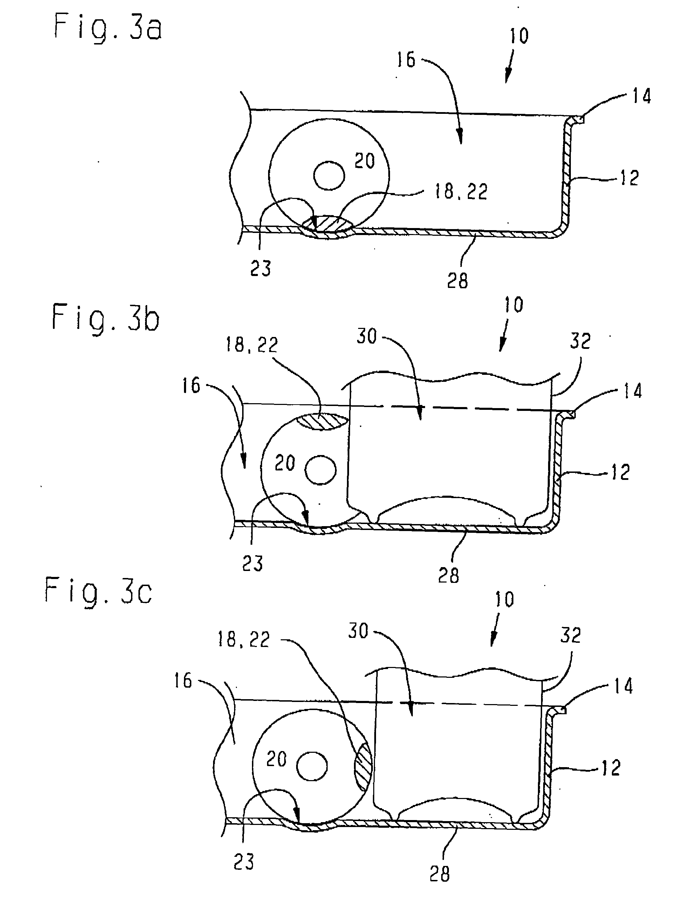

In einer in Figur 1 dargestellten Nichtgebrauchsstellung des Fachteilers 18 liegt der Steg 22 versenkt in einer Vertiefung 23 in einem Boden 28 des Ablagefachs 12 ein. Die Nichtgebrauchsstellung des Fachteilers 18 ist auch in Figur 3a dargestellt. Durch Drehen des Fachteilers 18 um die Drehachse 26 lässt sich der Steg 22 und damit der Fachteiler 18 selbst in verschiedene Gebrauchsstellungen bewegen, wie sie in Figuren 2, 3b und 3c dargestellt sind. In Figuren 2 und 3b ist der Steg 22 in seine höchste Stellung bewegt, er unterteilt das Ablagefach 12 in einen Einstellbereich 30 zum Einstellen bspw. einer Getränkedose 32, wie in Figuren 2 und 3b dargestellt, und einen übrigen Bereich 34, der zum Einlegen von Gegenständen nutzbar ist. In Figur 3c ist der Fachteiler durch Drehung um 90° gegenüber der Nichtgebrauchsstellung in eine andere Gebrauchsstellung gedreht, in der der Steg 22 einen kleineren Einstellbereich 30 zum Einstellen eines im Durchmesser kleineren Getränkbehälters, und einen übrigen, größeren Bereich unterteilt. Durch die verschiedenen Gebrauchsstellungen des Fachteilers 18 lässt sich die Größe des Einstellbereichs 30 an Getränkebehälter 32 verschieden großen Durchmessers anpassen.

Zur Arretierung des Fachteilers 18 in der jeweiligen Stellung ist ein in der Zeichnung nicht sichtbarer Rastmechanismus vorgesehen, der mit einer Lösetaste 35 entriegelbar ist. Derartige Rastmechanismen sind dem Fachmann bekannt und sollen, da sie nicht den eigentlichen Gegenstand der Erfindung bilden, an dieser Stelle nicht näher erläutert werden.

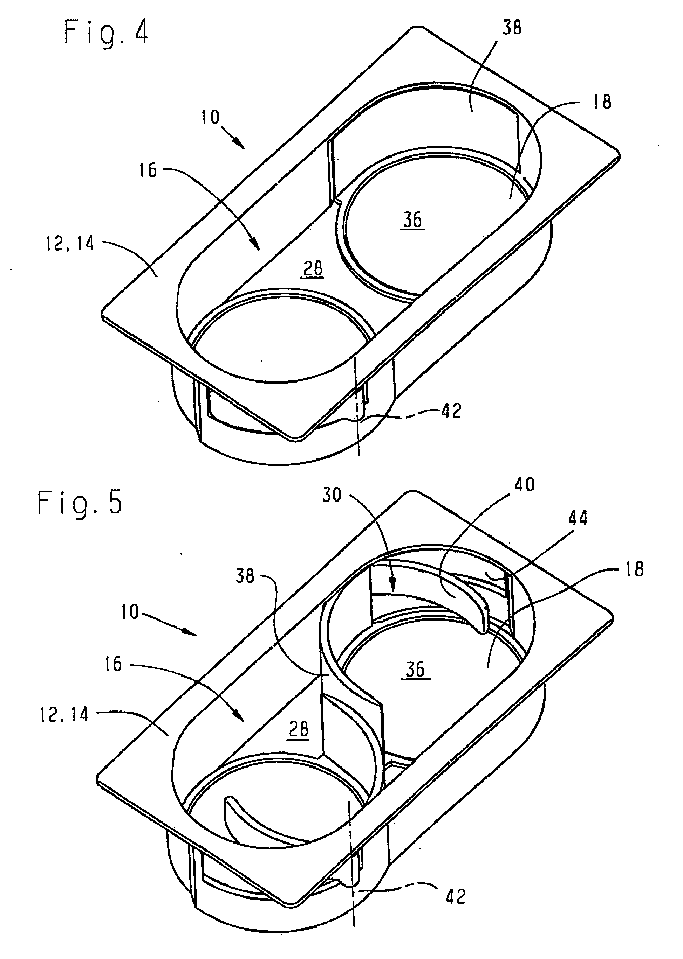

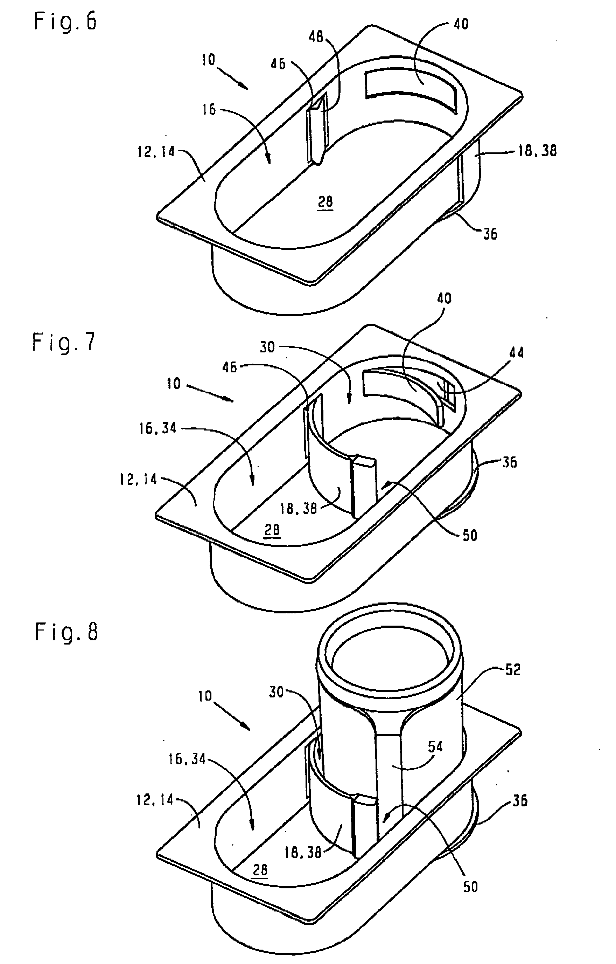

Zur Erläuterung der weiteren Figuren werden nachfolgend für übereinstimmende Bauteile gleiche Bezugszahlen wie in Figuren 1-3 verwendet. Der in Figur 4 dargestellte, erfindungsgemäße Halter 10 weist ein Ablagefach 12 mit einem in Draufsicht rechteckigen Rand 14 und einer in Draufsicht ovalen Vertiefung 16 auf. Der Halter 10 weist zwei Fachteiler 18 auf, die ihrerseits Drehteller 36 aufweisen, die drehbar auf dem Boden 28 des Ablagefachs 12 angeordnet sind. Die Drehteller 36 sind konzentrisch zu gedachten Mittelpunkten der halbkreisförmigen Enden der ovalen Vertiefung 16 des Ablagefachs 12 angeordnet und um vertikale Drehachsen durch die genannten Mittelpunkte drehbar. Die Drehteller 36 weisen eine Wandung 38 auf, die sich um etwa einen Viertelkreisbogen entlang eines Umfangs der Drehteller 36 erstreckt. Durch Drehen der Drehteller 36 bzw. der Fachteiler 18 sind die Wandungen 38 aus der in Figur 4 dargestellten Nichtgebrauchsstellung in die in Figur 5 dargestellte Gebrauchsstellung bewegbar. In der Nichtgebrauchsstellung liegen die Wandungen 38 innen an einer am Ende der Vertiefung 16 halbzylinderförmigen Seitenwand der Vertiefung 16 des Ablagefachs 12 an. In der Gebrauchsstellung trennt jede Wandung 38 der Fachteiler 18 einen topfförmigen Einstellbereich 30 zum Einstellen eines in Figuren 4 und 5 nicht dargestellten Getränkebehälters vom übrigen Ablagefach 12 ab.

Der Halter 10 aus Figuren 4 und 5 weist für jeden seiner beiden Einstellbereiche 30 eine schwenkbare Durchmesserausgleichsklappe 40 auf, die die Form eines gewölbten, leistenförmigen Fingers aufweist. Die Durchmesserausgleichsklappe 40 ist im Bereich der halbkreisförmigen Seitenwand der Vertiefung 16 an den Enden der Vertiefung 16 des Ablagefachs 12 angeordnet. Die Durchmesserausgleichsklappe 40 ist um eine vertikale, in Figur 5 mit einer Strichpunktlinie dargestellte Schwenkachse 42 schwenkbar. Zur Schwenklagerung weist die Ausgleichsklappe zwei nach oben und nach unten abstehende, in der Zeichnung nicht sichtbare Lagerzapfen auf, die drehbar in komplementären Lagerlöcher des Ablagefachs 12 aufgenommen sind. Ein in der Zeichnung ebenfalls nicht sichtbares Federelement, das als Schenkelfeder ausgebildet ist, schwenkt die Durchmesserausgleichsklappen 40 in die Einstellbereiche 30 hinein, wie in Figur 5 dargestellt. Die Durchmesserausgleichsklappen 40 drücken einen eingestellten Getränkebehälter gegen die Wandung 38 der Fachteiler 18 und halten dadurch Getränkebehälter mit kleinerem Durchmesser kippsicher in den Einstellöffnungen 30.

Werden die Fachteiler 18 in die Nichtgebrauchsstellung gedreht, gleiten ihre Wandungen 38 an Innenseiten der Durchmesserausgleichsklappen 40 entlang und drücken die Durchmesserausgleichsklappen 40 gegen die Kraft der Federelemente nach außen in Aussparungen 44, die in der Seitenwand der Vertiefung 16 des Ablagefachs 12 angebracht sind. Ein Innenraum der Vertiefung 16 des Ablagefachs 12 steht dadurch in der Nichtgebrauchsstellung der Fachteiler 18 vollständig zum Einlegen von Gegenständen zur Verfügung.

Der in Figuren 6 bis 8 dargestellte, erfindungsgemäße Halter 10 ist eine abgewandelte Aufführung des in Figuren 4 und 5 dargestellten und vorstehend erläuterten Halters 10. Zur Vermeidung von Wiederholungen werden nachfolgend im wesentlichen nur die Unterschiede erläutert und es wird im übrigen hinsichtlich des Halters 10 aus Figuren 6 bis 8 auf die Ausführungen zu Figuren 4 und 5 verwiesen.

Der Halter 10 aus Figuren 6 bis 8 weist nur einen Fachteiler 18 auf. Der Fachteiler 18 weist einen Drehteller 36 auf, der unterhalb des Bodens 28 des Ablagefachs 12 angeordnet ist. Eine Wandung 38 des Fachteilers 18 weist ungefähr die Form eines Halbzylinders auf und erstreckt sich über ungefähr 180° eines Umfangrandes des Drehtellers 36. Die Wandung 38 befindet sich in der in Figur 6 dargestellten Nichtgebrauchsstellung auf einer Außenseite der am Ende der Vertiefung 16 halbzylinderförmigen Seitenwand der Vertiefung 16 des Ablagefachs 12. Der Fachteiler 18 des Halters 10 aus Figuren 6 bis 8 befindet sich also in seiner in Figur 6 dargestellten Nichtgebrauchsstellung an einer Außenseite des Ablagefachs 12. Durch Drehen des Fachteilers 18 in die in Figuren 7 und 8 dargestellte Gebrauchsstellung gelangt die Wandung 38 des Fachteilers 18 in das Ablagefach 12 hinein und teilt eine in etwa zylinderförmige Einstellöffnung 30 vom übrigen Teil des Ablagefachs 12 ab. Die Seitenwand der Vertiefung 16 des Ablagefachs 12 ist mit einem Schlitz 46 versehen, durch den die Wandung 38 beim Drehen des Fachteilers 18 aus der Nichtgebrauchsstellung in die Gebrauchsstellung in die Vertiefung 16 eintritt. Zwischen der Wandung 38 und dem Drehteller 36 besteht ein Schlitz für den Boden 28 des Ablagefachs 12, da sich die Wandung 38 oberhalb und der Drehteller 36 unterhalb des Bodens 28 befindet. Um den Fachteiler 18 in der Nichtgebrauchsstellung greifen und drehen zu können, weist die Wandung 38 des Fachteiles 18 einen Griffwulst 46 an ihrem Ende auf, das sich in der Nichtgebrauchsstellung des Fachteilers 18 im Schlitz 46 in der Seitenwand des Ablagefachs 12 befindet.

Ebenso wie der in Figuren 4 und 5 dargestellte Halter 10 weist auch der in Figuren 6 bis 8 dargestellte Halter 10 eine federbeaufschlagte Durchmesserausgleichsklappe 40 auf, die beim Drehen des Fachteiles 18 in die Nichtgebrauchsstellung in eine Ausnehmung 44 in der Seitenwand des Ablagefachs 12 hineinverschwenkt wird.

Wie in Figuren 7 und 8 zu sehen, besteht in der Gebrauchsstellung des Fachteilers 18 eine Lücke 50 zwischen der Wandung 38 des Fachteilers 18 und der Seitenwand des Ablagefachs 12. Dadurch lässt sich, wie in Figur 8 dargestellt, eine Henkeltasse 52 so in den Einstellbereich 30 des Halters 10 einstellen, dass ein Henkel 54 der Henkeltasse 52 die Lücke 50 durchgreift.

## Patentansprüche

1. Halter, für einen Getränkebehälter, mit einem Ablagefach, wobei der Halter (10) einen Fachteiler (18) aufweist, der mit einer Drehlagerung (24) als Führung aus einer Nichtgebrauchsstellung, in der der Fachteiler (18) das Ablagefach (12) nicht unterteilt, in eine Gebrauchsstellung, in der der Fachteiler (18) einen Einstellbereich (30) für den Getränkebehälter (32) vom übrigen Ablagefach (12) abteilt, und umgekehrt beweglich am Ablagefach (12) geführt ist, und wobei der Fachteiler (18) eine Wandung (22) aufweist, die durch Drehen des Fachteilers (18) in die Gebrauchsstellung so in das Ablagefach (12) hineinbewegbar ist, dass sie den Einstellbereich (30) vom übrigen Ablagefach (12) abteilt, **dadurch gekennzeichnet, dass** die Drehachse (26) der Drehlagerung (24) des Fachteilers (18) im wesentlichen horizontal angeordnet ist.

2. Halter nach Anspruch 1, **dadurch gekennzeichnet, dass** die Wandung (22) exzentrisch zur Drehachse (26) des Fachteilers (18) ist.

3. Halter, für einen Getränkebehälter, mit einem Ablagefach, wobei der Halter (10) einen Fachteiler (18) aufweist, der mit einer Führung (24) aus einer Nichtgebrauchsstellung, in der der Fachteiler (18) das Ablagefach (12) nicht unterteilt, in eine Gebrauchsstellung, in der der Fachteiler (18) einen Einstellbereich (30) für den Getränkebehälter (32; 52) vom übrigen Ablagefach (12) abteilt, und umgekehrt beweglich am Ablagefach (12) geführt ist, **dadurch gekennzeichnet, dass** der Halter (10) eine Durchmesserausgleichsklappe (40) aufweist, die beim Bewegen des Fachteilers (18) in die Nichtgebrauchsstellung aus dem Ablagefach (12) hinaus bewegt wird.

4. Halter nach Anspruch 3, **dadurch gekennzeichnet, dass** der Fachteiler (18) eine Drehlagerung (24) als Führung und eine Wandung (22; 38) aufweist, die durch Drehen des Fachteilers (18) in die Gebrauchsstellung so in das Ablagefach (12) hineinbewegbar ist, dass sie den Einstellbereich (30) vom übrigen Ablagefach (12) abteilt.

5. Halter nach Anspruch 4, **dadurch gekennzeichnet, dass** die Drehachse (60) der Drehlagerung des Fachteilers (18) im wesentlichen vertikal angeordnet ist.

6. Halter nach Anspruch 1 oder 3, **dadurch gekennzeichet, dass** der Fachteiler (18) in mehrere Gebrauchsstellungen beweglich ist, in denen er unterschiedlich große Einstellbereiche (30) vom übrigen Ablagefach (12) abteilt.

7. Halter nach Anspruch 1 oder 3, **dadurch gekennzeichnet, dass** der Halter (10) mehrere Fachteiler (18) aufweist.

8. Halter nach Anspruch 1 oder 3, **dadurch gekennzeichnet, dass** der Halter (10) in der Gebrauchsstellung des Fachteilers (18) eine Lücke (50) zwischen dem Fachteiler (18) und einer Wand des Ablagefachs (12) aufweist.

## Claims

1. Holder, for a drinks container, having a storage compartment, the holder (10) having a compartment divider (18) which, with a pivot bearing (24) as guide means, is guided on the storage compartment (12) so as to be movable from a non-use position, in which the compartment divider (18) does not divide the storage compartment (12), into an in-use position in which the compartment divider (18) divides off an insertion region (30) for the drinks container (32) from the remainder of the storage compartment (12) and *vice versa,* and the compartment divider (18) having a wall (22) which, by rotation of the compartment divider (18) into the in-use position, is movable into the storage compartment (12) so that it divides off the insertion region (30) from the remainder of the storage compartment (12), **characterized in that** the pivot axis (26) of the pivot bearing (24) of the compartment divider (18) is arranged substantially horizontally.

2. Holder according to claim 1, **characterized in that** the wall (22) is eccentric with respect to the pivot axis (26) of the compartment divider (18).

3. Holder, for a drinks container, having a storage compartment, the holder (10) having a compartment divider (18) which, with a guide means (24), is guided on the storage compartment (12) so as to be movable from a non-use position, in which the compartment divider (18) does not divide the storage compartment (12), into an in-use position in which the compartment divider (18) divides off an insertion region (30) for the drinks container (32; 52) from the remainder of the storage compartment (12) and *vice versa,* **characterized in that** the holder (10) has a diameter-compensating flap (40) which, on movement of the compartment divider (18) into the non-use position, is moved out of the storage compartment (12).

4. Holder according to claim 3, **characterized in that** the compartment divider (18) has a pivot bearing (24) as guide means and a wall (22; 38) which, by rotation of the compartment divider (18) into the in-use position, is movable into the storage compartment (12) so that it divides off the insertion region (30) from the remainder of the storage compartment (12).

5. Holder according to claim 4, **characterized in that** the pivot axis (60) of the pivot bearing of the compartment divider (18) is arranged substantially vertically.

6. Holder according to claim 1 or 3, **characterized in that** the compartment divider (18) is movable into a plurality of in-use positions in which it divides off differently sized insertion regions (30) from the remainder of the storage compartment (12).

7. Holder according to claim 1 or 3, **characterized in that** the holder (10) has a plurality of compartment dividers (18).

8. Holder according to claim 1 or 3, **characterized in that** the holder (10) in the in-use position of the compartment divider (18) has a gap (50) between the compartment divider (18) and a wall of the storage compartment (12).

## Revendications

1. Support pour un récipient à boissons, avec un casier de rangement, sachant que le support (10) présente un diviseur de casier (18) qui, au moyen d'un palier de rotation (24) comme guide, est guidé à déplacement sur le casier de rangement (12) d'une position de non utilisation, dans laquelle le diviseur de casier (18) ne divise pas le casier de rangement (12), dans une position d'utilisation dans laquelle le diviseur de casier (18) sépare une zone de placement (30) pour le récipient à boissons (32) du reste du casier de rangement (12), et vice versa, et sachant que le diviseur de casier (18) présente une paroi (22) qui, par rotation du diviseur de casier (18) dans la position d'utilisation, peut être déplacée à l'intérieur du casier de rangement (12) de telle sorte qu'elle sépare la zone de placement (30) du reste du casier de rangement (12), **caractérisé en ce que** l'axe de rotation (26) du palier de rotation (24) du diviseur de casier (18) est disposé sensiblement à l'horizontale.

2. Support selon la revendication 1, **caractérisé en ce que** la paroi (22) est excentrique par rapport à l'axe de rotation (26) du diviseur de casier (18).

3. Support pour un récipient à boissons, avec un casier de rangement, sachant que le support (10) présente un diviseur de casier (18) qui, au moyen d'un guide (24), est guidé à déplacement sur le casier de rangement (12) d'une position de non utilisation, dans laquelle le diviseur de casier (18) ne divise pas le casier de rangement (12), dans une position d'utilisation dans laquelle le diviseur de casier (18) sépare une zone de placement (30) pour le récipient à boissons (32 ; 52) du reste du casier de rangement (12), et vice versa, **caractérisé en ce que** le support (10) présente un volet (40) de compensation de diamètre qui est déplacé hors du casier de rangement (12) lors du déplacement du diviseur de casier (18) dans la position de non utilisation.

4. Support selon la revendication 3, **caractérisé en ce que** le diviseur de casier (18) présente un palier de rotation (24) comme guide et une paroi (22 ; 38) qui, par rotation du diviseur de casier (18) dans la position d'utilisation, peut être déplacée à l'intérieur du casier de rangement (12) de telle sorte qu'elle sépare la zone de placement (30) du reste du casier de rangement (12).

5. Support selon la revendication 4, **caractérisé en ce que** l'axe de rotation du palier de rotation du diviseur de casier (18) est disposé sensiblement à la verticale.

6. Support selon la revendication 1 ou 3, **caractérisé en ce que** le diviseur de casier (18) peut être déplacé dans plusieurs positions d'utilisation dans lesquelles il sépare des zones de placement (30) de différentes tailles du reste du casier de rangement (12).

7. Support selon la revendication 1 ou 3, **caractérisé en ce que** le support (10) présente plusieurs diviseurs de casier (18).

8. Support selon la revendication 1 ou 3, **caractérisé en ce que** le support (10) présente, dans la position d'utilisation du diviseur de casier (18), un espace vide (50) entre le diviseur de casier (18) et une paroi du casier de rangement (12).
